# EUROPEAN PATENT APPLICATION

(11) **EP 4 498 731 A1**
(43) Date of publication of application: **29.01.2025**
(21) Application number: 23773425.6
(22) Date of filing: 03.01.2023
(51) Int. Cl.: H04W 48/16

(54) **DATA TRANSMISSION METHOD AND DEVICES THEREOF, STORAGE MEDIUM, AND PROGRAM PRODUCT**

(30) Priority: 21.03.2022 CN 202210278494
(71) Applicant: ZTE Corporation, Shenzhen, Guangdong 518057 (CN)
(72) Inventor: XIE, Feng, Shenzhen, Guangdong 518057 (CN); WANG, Fei, Shenzhen, Guangdong 518057 (CN); LIU, Hanchao, Shenzhen, Guangdong 518057 (CN); XUE, Yan, Shenzhen, Guangdong 518057 (CN)
(74) Representative: Savi, Massimiliano
(86) International application number: PCT/CN2023/070119
(87) International publication number: WO 2023/179173

(57) **Abstract**

Embodiments of the present application provide a data transmission method and devices thereof, a storage medium, and a program product. The method comprises the following steps: after a cell search stage in an initial access process, a network device acquires a synchronized block message and sends the synchronized block message to a terminal device, and then the terminal device reads a data packet according to the synchronized block message.

## Description

### CROSS-REFERENCE TO RELATED APPLICATION

This application is filed on the basis of Chinese patent application No. 202210278494.4 filed March 21, 2022, and claims priority to the Chinese patent application, the entire contents of which are incorporated herein by reference.

### TECHNICAL FIELD

The present disclosure relates to the technical field of communication, and more particularly, to a data transmission method, a device, a storage medium, and a program product.

### BACKGROUND

Before transmitting data over a network, a terminal device needs to connect to the network through an initial access process. Therefore, a communication channel needs to be established via signaling to enable a data transmission between the terminal device and the outside. Due to the high overhead associated with signaling transmission, in the case of small data transmissions, the number of times of signaling transmission may be greater than the number of times of data packet transmission, and the number of bytes of transmitted signaling may be greater than the number of bytes of the data packets. This leads to low transmission efficiency. Furthermore, the problem of high signaling overhead is exacerbated in scenarios involving massive terminal communication.

### SUMMARY

The following is a summary of the subject matter set forth in this description. This summary is not intended to limit the scope of protection of the claims.

Embodiments of the present disclosure provide a data transmission method, a device, a storage medium, and a program product, to improve data transmission efficiency.

In accordance with an aspect of the present disclosure, an embodiment provides a data transmission method, applied to a terminal device, the data transmission method including: acquiring a Synchronization Signal Block (SSB) message sent by a network device; and acquiring a data packet according to the SSB message.

In accordance with another aspect of the present disclosure, an embodiment provides a data transmission method, applied to a network device, the data transmission method including: acquiring an SSB message; and sending the SSB message to a terminal device such that the terminal device acquires a data packet according to the SSB message.

In accordance with still another aspect of the present disclosure, an embodiment provides a terminal device, including: a memory, a processor, and a computer program stored in the memory and executable by the processor, where the computer program, when executed by the processor, causes the processor to carry out the data transmission method described above.

In accordance with still another aspect of the present disclosure, an embodiment provides a network device, including: a memory, a processor, and a computer program stored in the memory and executable by the processor, where the computer program, when executed by the processor, causes the processor to carry out the data transmission method.

In accordance with still another aspect of the present disclosure, an embodiment provides a computer-readable storage medium, storing a computer-executable instruction which, when executed by a processor, causes the processor to carry out the data transmission method described above.

In accordance with yet another aspect of the present disclosure, an embodiment provides a computer program product, including a computer program or a computer instruction stored in a computer-readable storage medium, where the computer program or the computer instruction, when read from the computer-readable storage medium and executed by a processor of a computer device, causes the computer device to carry out the data transmission method described above.

In the embodiments of the present disclosure, after a cell search stage in an initial access process, a network device acquires an SSB message and sends the SSB message to a terminal device; and then the terminal device acquires a data packet according to the SSB message. According to the technical schemes of the embodiments of the present disclosure, the timing of data packet transmission is advanced to after the cell search stage, such that the terminal device performs data transmission with the network device immediately after cell synchronization, thereby reducing signaling overheads between the terminal device and the network device caused by data transmission in follow-up stages after the initial access process, and reducing energy consumption and data reception delay of the terminal device.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.
FIG. 1 is a schematic diagram of an implementation environment configured for executing a data transmission method according to an embodiment of the present disclosure;
FIG. 2 is a flowchart of a data transmission method from a terminal device side according to an embodiment of the present disclosure;
FIG. 3 is a flowchart of S200 in FIG. 2 in a case where a Physical Broadcast Channel (PBCH) in the SSB message carries the data packet;
FIG. 4 is a flowchart of an embodiment of S300 in FIG. 3;
FIG. 5 is a flowchart of S200 in FIG. 2 in a case where a PBCH in the SSB message carries scheduling grant information corresponding to the data packet;
FIG. 6 is a flowchart of an embodiment of S410 in FIG. 5;
FIG. 7 is a flowchart of S200 in FIG. 2 in a case where a PBCH in the SSB message carries scheduling grant configuration information;
FIG. 8 is a flowchart of an embodiment of S510 in FIG. 7;
FIG. 9 is a flowchart of S200 in FIG. 2 in a case where a time-frequency domain position in the SSB message includes the data packet;
FIG. 10 is a flowchart of an embodiment of S600 in FIG. 9;
FIG. 11 is a flowchart of S200 in FIG. 2 in a case where a time-frequency domain position in the SSB message includes scheduling grant information corresponding to the data packet;
FIG. 12 is a flowchart of an embodiment of S710 in FIG. 11;
FIG. 13 is a flowchart of a data transmission method from a network device side according to an embodiment of the present disclosure;
FIG. 14 is a flowchart of S900 in FIG. 13 in a case where a PBCH in the SSB message carries the data packet;
FIG. 15 is a flowchart of an embodiment of S1000 in FIG. 14;
FIG. 16 is a flowchart of S900 in FIG. 13 in a case where a PBCH in the SSB message carries scheduling grant information corresponding to the data packet;
FIG. 17 is a flowchart of an embodiment of S1100 in FIG. 16;
FIG. 18 is a flowchart of S900 in FIG. 13 in a case where a PBCH in the SSB message carries scheduling grant configuration information;
FIG. 19 is a flowchart of an embodiment of S1200 in FIG. 18;
FIG. 20 is a flowchart of S900 in FIG. 13 in a case where a time-frequency domain position in the SSB message includes the data packet;
FIG. 21 is a flowchart of an embodiment of S1300 in FIG. 20;
FIG. 22 is a flowchart of S900 in FIG. 13 in a case where a time-frequency domain position in the SSB message includes scheduling grant information corresponding to the data packet;
FIG. 23 is a flowchart of an embodiment of S1400 in FIG. 22;
FIG. 24 is a schematic diagram of a data transmission method in a case where a PBCH in the SSB message carries the data packet according to an embodiment of the present disclosure;
FIG. 25 is a schematic diagram of a data transmission method in a case where a PBCH in the SSB message carries scheduling grant information corresponding to the data packet according to an embodiment of the present disclosure;
FIG. 26 is a schematic diagram of a data transmission method in a case where a PBCH in the SSB message carries scheduling grant configuration information according to an embodiment of the present disclosure;
FIG. 27 is a schematic structural diagram of an SSB message in which a time-frequency domain position includes a data packet according to an embodiment of the present disclosure; and
FIG. 28 is a schematic structural diagram of an SSB message in which a time-frequency domain position includes scheduling grant information corresponding to a data packet according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In related technologies, before transmitting data over a network, a terminal device needs to connect to the network through an initial access process. Therefore, a communication channel needs to be established via signaling to enable a data transmission between the terminal device and the outside. Due to the high overhead associated with signaling transmission, in the case of small data transmissions, the number of times of signaling transmission may be greater than the number of times of data packet transmission, and the number of bytes of transmitted signaling may be greater than the number of bytes of the data packets. This leads to low transmission efficiency. Furthermore, the problem of high signaling overhead is exacerbated in scenarios involving massive terminal communication. Therefore, the mechanism of separating signaling and user data in existing mobile data communication systems is not suitable for the transmission of small data packets.

The initial access process includes cell search, system message reception, random access, and other stages. Cell search is a process in which the terminal device performs downlink time and spectrum synchronization using a Primary Synchronization Signal (PSS) and a Secondary Synchronization Signal (SSS) and obtains a physical cell identity. After the synchronization is completed in the cell search stage, the terminal device receives and decodes a system message, to acquire a system message necessary for subsequent random access. After acquiring the system message, the terminal device implements uplink synchronization through random access, and enters an RRC connected mode from a non-RRC connected mode such as an RRC_IDLE state or an RRC_INACTIVE state, to prepare for uplink and downlink data transmission.

It can be learned from the above communication channel establishment process that in a communication process of a mobile communication system, a communication channel needs to be established through signaling, in order to achieve a data transmission between the terminal device and the outside. For example, taking a downlink data channel of the terminal device as an example, after a service is initiated, the signaling interaction process is as follows. Firstly, a paging process is used to help the network to page for terminal devices currently in the non-RRC connected mode. If the terminal device is in the RRC idle mode, the core network sends a paging message to the terminal device through a Non-Access Stratum (NAS) signaling. Then, after the terminal device receives the paging message from the core network, an NAS of the terminal device triggers a service request. At the same time, a higher layer of the terminal device triggers a Media Access Control (MAC) layer to initiate a random access request and sends the random access request through a physical layer, and through the processes of RRC connection setup request, RRC connection setup, and RRC connection setup completion, the core network establishes a connection and security mechanism between the user plane and the control plane. As such, downlink and uplink channels between the core network and the terminal device are established, and the terminal device can send and receive data packets.

Based on the above, embodiments of the present disclosure provide a data transmission method, a device, a storage medium, and a program product. The method is described as follows. After a cell search stage in an initial access process, a network device acquires an SSB message and sends the SSB message to a terminal device; and then the terminal device acquires a data packet according to the SSB message. According to the technical schemes of the embodiments of the present disclosure, the timing of data packet transmission is advanced to after the cell search stage, such that the terminal device performs data transmission with the network device immediately after cell synchronization, thereby reducing signaling overheads between the terminal device and the network device caused by data transmission in follow-up stages after the initial access process, and reducing energy consumption and data reception delay of the terminal device.

The embodiments of the present disclosure will be further described in detail below in conjunction with the accompanying drawings.

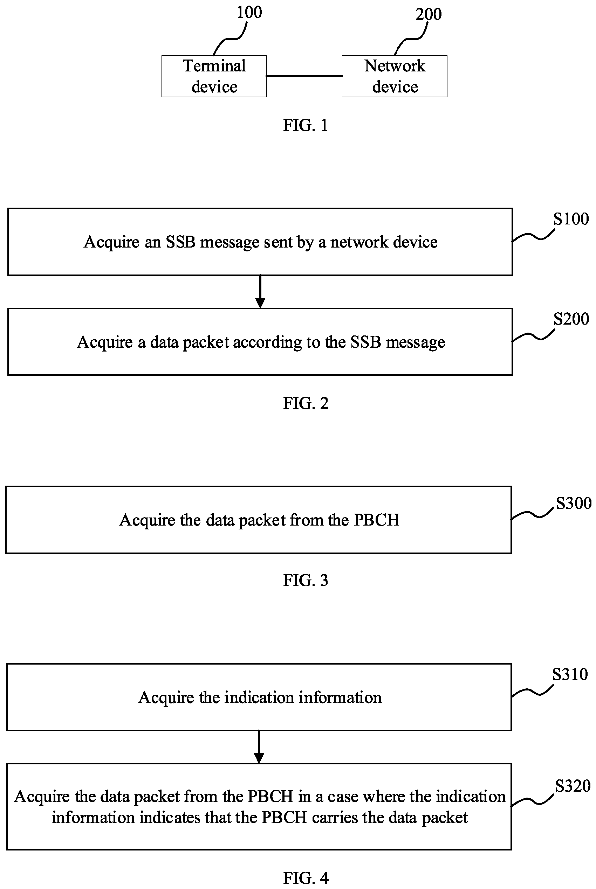

FIG. 1 is a schematic diagram of an implementation environment configured for executing a data transmission method according to an embodiment of the present disclosure.

In the example of FIG. 1, the implementation environment includes a terminal device 100 and a network device 200. The terminal device 100 is in communication connection with the network device 200.

The terminal device 100 and the network device 200 each include a processor and a memory. The processor and the memory may be connected by a bus or in other ways.

The memory, as a non-transitory computer-readable storage medium, may be configured for storing a non-transitory software program and a non-transitory computer-executable program. In addition, the memory may include a high-speed random access memory, and may also include a non-transitory memory, e.g., at least one magnetic disk storage device, flash memory device, or other non-transitory solid-state storage device. In some implementations, the memory may include memories located remotely from the processor, and the remote memories may be connected to the processor via a network. Examples of the network include, but not limited to, the Internet, an intranet, a local area network, a mobile communication network, and combinations thereof.

It can be understood by those having ordinary skills in the art that the implementation environment may be applied to a 3rd Generation (3G) communication network system, a Long Term Evolution (LTE) communication network system, a 5th Generation (5G) communication network system, a 6th Generation (6G) communication network system, future evolved mobile communication network systems, etc., which is not particularly limited in this embodiment.

Those having ordinary skills in the art may understand that the implementation environment shown in FIG. 1 does not constitute a limitation to the embodiments of the present disclosure, and more or fewer components than those shown in the figure may be included, or some components may be combined, or a different component arrangement may be used.

In the implementation environment shown in FIG. 1, the processor in the terminal device 100 or the network device 200 may call a data transmission program stored in the memory to execute the data transmission method.

Based on the above implementation environment, embodiments of a data transmission method from a terminal device side of the present disclosure are proposed below.

FIG. 2 is a flowchart of a data transmission method from a terminal device side according to an embodiment of the present disclosure. The method is applied to a terminal device and includes, but not limited to, the following steps S100 and S200.

At S100, an SSB message sent by a network device is acquired.

At S200, a data packet is acquired according to the SSB message.

In the embodiment of the present disclosure, after a cell search stage in an initial access process, a network device acquires an SSB message and sends the SSB message to a terminal device; and then the terminal device acquires a data packet according to the SSB message. According to the technical schemes of the embodiments of the present disclosure, the timing of data packet transmission is advanced to after the cell search stage, such that the terminal device performs data transmission with the network device immediately after cell synchronization, thereby reducing signaling overheads between the terminal device and the network device caused by data transmission in follow-up stages after the initial access process, and reducing energy consumption and data reception delay of the terminal device.

It should be noted that a conventional New Radio (NR) SSB includes a PSS, an SSS, and a PBCH, and a user equipment (UE) in the RRC_INACTIVE or RRC_IDLE mode needs to receive an SSB message periodically.

In the embodiment of the present disclosure, based on a message structure of the SSB message, the data packet, scheduling grant information of the data packet, or configuration information of the scheduling grant information of the data packet may be reused in the PBCH. In the embodiment of the present disclosure, an SSB message having a special structure may be designed, such that the SSB message not only includes a PSS, an SSS, and the PBCH, but also includes a data packet or scheduling grant information of a data packet. All the above methods can enable the terminal device and the network device to perform data transmission immediately after cell synchronization, such that signaling overheads required for establishing an RRC connection can be reduced to the greatest extent, thereby reducing energy consumption of the terminal device and data reception delay of the terminal device. Embodiments of the above methods are described with reference to FIG. 3 to FIG. 12. Details are given as follows.

FIG. 3 is a flowchart of S200 in FIG. 2 in a case where a PBCH in the SSB message carries the data packet. When the SSB message includes a PBCH carrying the data packet, S200 includes, but not limited to, a following step S300.

At S300, the data packet is acquired from the PBCH.

In the embodiment of the present disclosure, the data packet may be reused in the PBCH, i.e., the PBCH in the SSB message directly carries the data packet. After receiving the SSB message sent by the network device, the terminal device can acquire the data packet by decoding the SSB message.

FIG. 4 is a flowchart of an embodiment of S300 in FIG. 3. The SSB message includes a PBCH, a PSS, and an SSS. At least one of the PSS or the SSS carries indication information. S300 includes, but not limited to, the following steps S310 and S320.

At S310, the indication information is acquired.

At S320, the data packet is acquired from the PBCH in a case where the indication information indicates that the PBCH carries the data packet.

In the embodiment of the present disclosure, indication information may further be set in the PSS or the SSS to indicate whether the PBCH carries the data packet. After receiving the SSB message sent by the network device, the terminal device acquires the indication information in the SSB message. If the indication information indicates that the PBCH carries the data packet, the terminal device acquires the data packet and broadcast information from the PBCH. If the indication information indicates that the PBCH does not carry the data packet, the terminal device acquires only the broadcast information from the PBCH.

It should be noted that the indication information may be set in the PSS only, in the SSS only, or in both the PSS and the SSS.

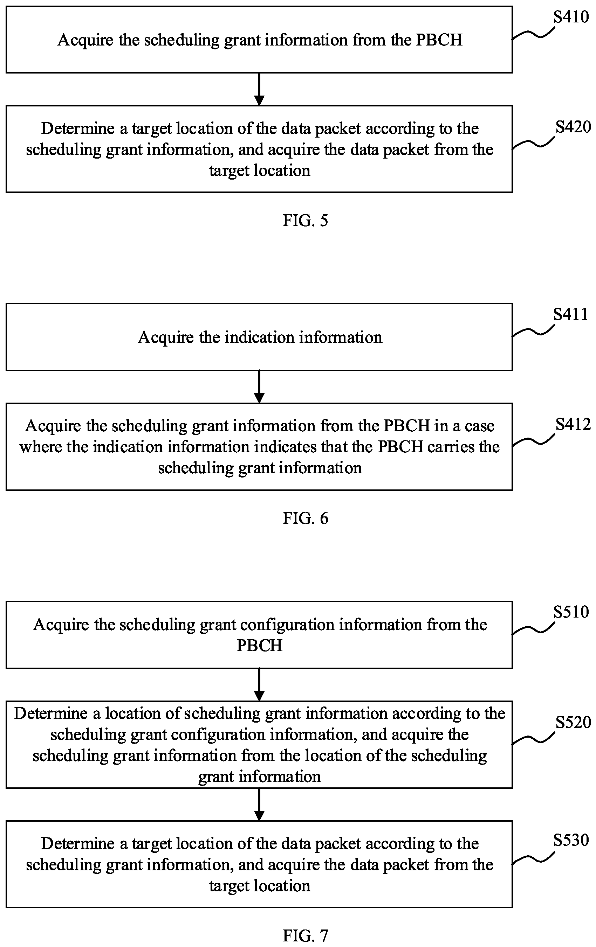

FIG. 5 is a flowchart of S200 in FIG. 2 in a case where a PBCH in the SSB message carries scheduling grant information corresponding to the data packet. When the SSB message includes a PBCH and the PBCH carries scheduling grant information corresponding to the data packet, S200 includes, but not limited to, the following steps S410 and S420.

At S410, the scheduling grant information is acquired from the PBCH.

At S420, a target location of the data packet is determined according to the scheduling grant information, and the data packet is acquired from the target location.

In the embodiment of the present disclosure, the scheduling grant information corresponding to the data packet may be reused in the PBCH, i.e., the PBCH in the SSB message directly carries the scheduling grant information of the data packet. After receiving the SSB message sent by the network device, the terminal device can acquire a scheduling grant of the data packet by decoding the scheduling grant information, and then decode the data packet.

It should be noted that in the embodiment of the present disclosure, after acquiring the scheduling grant information, the terminal device obtains a target location of the data packet, and acquires the data packet from the target location. The target location of the data packet may be in or outside the SSB message.

FIG. 6 is a flowchart of an embodiment of S410 in FIG. 5. The SSB message includes a PBCH, a PSS, and an SSS. At least one of the PSS or the SSS carries indication information. S410 includes, but not limited to, the following steps S411 and S412.

At S411, the indication information is acquired.

At S412, the scheduling grant information is acquired from the PBCH in a case where the indication information indicates that the PBCH carries the scheduling grant information.

In the embodiment of the present disclosure, indication information may further be set in the PSS or the SSS to indicate whether the PBCH carries scheduling grant information. After receiving the SSB message sent by the network device, the terminal device acquires the indication information in the SSB message. If the indication information indicates that the PBCH carries the scheduling grant information, the terminal device acquires the scheduling grant information and broadcast information from the PBCH. If the indication information indicates that the PBCH does not carry the scheduling grant information, the terminal device acquires only the broadcast information from the PBCH.

It should be noted that the indication information may be set in the PSS only, in the SSS only, or in both the PSS and the SSS.

FIG. 7 is a flowchart of S200 in FIG. 2 in a case where a PBCH in the SSB message carries scheduling grant configuration information. When the SSB message includes a PBCH and the PBCH carries scheduling grant configuration information, S200 includes, but not limited to, the following steps S510, S520, and S530.

At S510, the scheduling grant configuration information is acquired from the PBCH.

At S520, a location of scheduling grant information is determined according to the scheduling grant configuration information, and the scheduling grant information is acquired from the location of the scheduling grant information.

At S530, a target location of the data packet is determined according to the scheduling grant information, and the data packet is acquired from the target location.

In the embodiment of the present disclosure, the scheduling grant configuration information may be reused in the PBCH, i.e., the PBCH in the SSB message directly carries the scheduling grant configuration information. After receiving the SSB message sent by the network device, the terminal device can acquire the scheduling grant information by decoding the scheduling grant configuration information, and then acquire the data packet according to the scheduling grant information.

It should be noted that in the embodiment of the present disclosure, after acquiring the scheduling grant configuration information, the terminal device obtains the location of the scheduling grant information, then acquires the scheduling grant information from the location of the scheduling grant information, determines the target location of the data packet according to the scheduling grant information, and finally acquires the data packet from the target location. The location of the scheduling grant information and the target location of the data packet may be in or outside the SSB message.

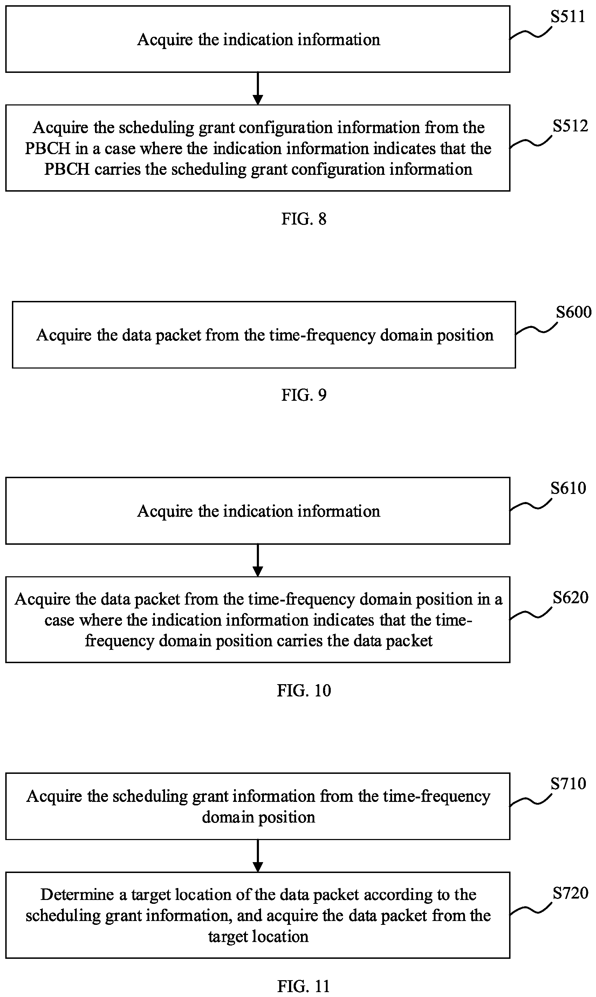

FIG. 8 is a flowchart of an embodiment of S510 in FIG. 7. The SSB message includes a PBCH, a PSS, and an SSS. At least one of the PSS or the SSS carries indication information. S510 includes, but not limited to, the following steps S511 and S512.

At S511, the indication information is acquired.

At S512, the scheduling grant configuration information is acquired from the PBCH in a case where the indication information indicates that the PBCH carries the scheduling grant configuration information.

In the embodiment of the present disclosure, indication information may further be set in the PSS or the SSS to indicate whether the PBCH carries scheduling grant configuration information. After receiving the SSB message sent by the network device, the terminal device acquires the indication information in the SSB message. If the indication information indicates that the PBCH carries the scheduling grant configuration information, the terminal device acquires the scheduling grant configuration information and broadcast information from the PBCH. If the indication information indicates that the PBCH does not carry the scheduling grant configuration information, the terminal device acquires only the broadcast information from the PBCH.

It should be noted that the indication information may be set in the PSS only, in the SSS only, or in both the PSS and the SSS.

FIG. 9 is a flowchart of S200 in FIG. 2 in a case where a time-frequency domain position in the SSB message includes the data packet. When a time-frequency domain position of the SSB message includes a PSS, an SSS, a PBCH, and the data packet, S200 includes, but not limited to, a following step S600.

At S600, the data packet is acquired from the time-frequency domain position.

In the embodiment of the present disclosure, a special SSB message may be designed, such that a time-frequency domain position of the SSB message not only includes a PSS, an SSS, and a PBCH, but also includes a data packet. In other words, the data packet is directly set in the time-frequency domain position of the SSB message. After receiving the SSB message sent by the network device, the terminal device can acquire the data packet by decoding the SSB message.

FIG. 10 is a flowchart of an embodiment of S600 in FIG. 9. The SSB message includes a PBCH, a data packet, a PSS, and an SSS. At least one of the PSS or the SSS carries indication information. S600 includes, but not limited to, the following steps S610 and S620.

At S610, the indication information is acquired.

At S620, the data packet is acquired from the time-frequency domain position in a case where the indication information indicates that the time-frequency domain position carries the data packet.

In the embodiment of the present disclosure, indication information may further be set in the PSS or the SSS to indicate whether the data packet is set in the time-frequency domain position. After receiving the SSB message sent by the network device, the terminal device acquires the indication information in the SSB message. If the indication information indicates that the data packet is set in the time-frequency domain position, the terminal device acquires the data packet from the time-frequency domain position.

It should be noted that the indication information may be set in the PSS only, in the SSS only, or in both the PSS and the SSS.

FIG. 11 is a flowchart of S200 in FIG. 2 in a case where a time-frequency domain position in the SSB message includes scheduling grant information corresponding to the data packet. When a time-frequency domain position of the SSB message includes a PSS, an SSS, a PBCH, and scheduling grant information, S200 includes, but not limited to, the following steps S710 and S720.

At S710, the scheduling grant information is acquired from the time-frequency domain position.

At S720, a target location of the data packet is determined according to the scheduling grant information, and the data packet is acquired from the target location.

In the embodiment of the present disclosure, a special SSB message may be designed, such that a time-frequency domain position of the SSB message not only includes a PSS, an SSS, and a PBCH, but also includes scheduling grant information corresponding to a data packet. In other words, the scheduling grant information corresponding to the data packet is directly set in the time-frequency domain position of the SSB message. After receiving the SSB message sent by the network device, the terminal device can acquire the scheduling grant information corresponding to the data packet by decoding the SSB message, then acquire a scheduling grant of the data packet by decoding the scheduling grant information, and decode the data packet.

It should be noted that in the embodiment of the present disclosure, after acquiring the scheduling grant information, the terminal device obtains a target location of the data packet, and acquires the data packet from the target location. The target location of the data packet may be in or outside the SSB message.

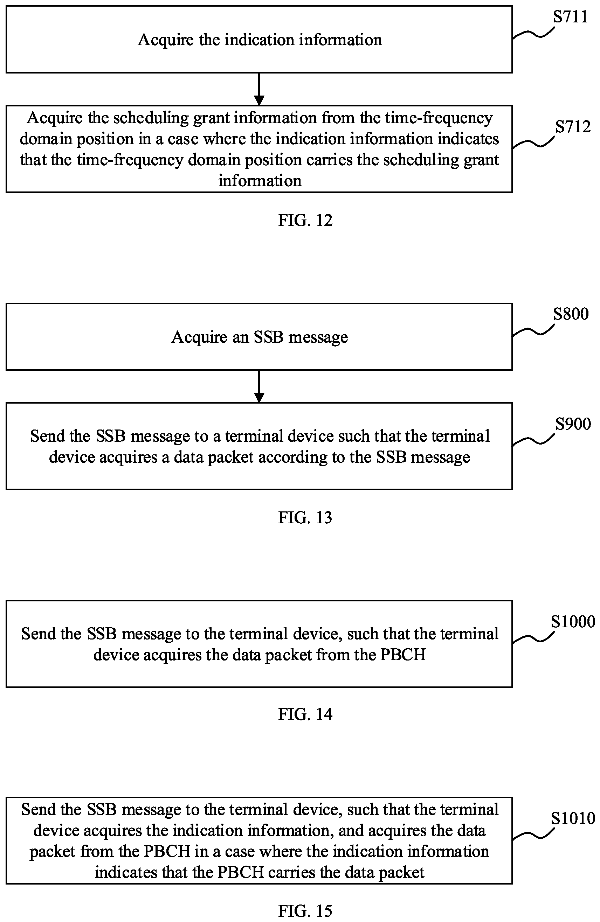

FIG. 12 is a flowchart of an embodiment of S710 in FIG. 11. The SSB message includes a PBCH, scheduling grant information, a PSS, and an SSS. At least one of the PSS or the SSS carries indication information. S710 includes, but not limited to, the following steps S711 and S712.

At S711, the indication information is acquired.

At S712, the scheduling grant information is acquired from the time-frequency domain position in a case where the indication information indicates that the time-frequency domain position carries the scheduling grant information.

In the embodiment of the present disclosure, indication information may further be set in the PSS or the SSS to indicate whether the scheduling grant information corresponding to the data packet is set in the time-frequency domain position. After receiving the SSB message sent by the network device, the terminal device acquires the indication information in the SSB message. If the indication information indicates that the scheduling grant information corresponding to the data packet is set in the time-frequency domain position, the terminal device acquires the scheduling grant information from the time-frequency domain position.

It should be noted that the indication information may be set in the PSS only, in the SSS only, or in both the PSS and the SSS.

Based on the embodiments of the data transmission method from a terminal device side in FIG. 2 to FIG. 12, embodiments of the data transmission method from a network device side of the present disclosure are correspondingly provided below.

FIG. 13 is a flowchart of a data transmission method from a network device side according to an embodiment of the present disclosure. The method is applied to a network device and includes, but not limited to, the following steps S800 and S900.

At S800, an SSB message is acquired.

At S900, the SSB message is sent to a terminal device such that the terminal device acquires a data packet according to the SSB message.

In the embodiment of the present disclosure, after a cell search stage in an initial access process, a network device acquires an SSB message and sends the SSB message to a terminal device; and then the terminal device acquires a data packet according to the SSB message. According to the technical schemes of the embodiments of the present disclosure, the timing of data packet transmission is advanced to after the cell search stage, such that the terminal device performs data transmission with the network device immediately after cell synchronization, thereby reducing signaling overheads between the terminal device and the network device caused by data transmission in follow-up stages after the initial access process, and reducing energy consumption and data reception delay of the terminal device.

It should be noted that a conventional NR SSB includes a PSS, an SSS, and a PBCH, and a UE in the RRC_INACTIVE or RRC_IDLE mode needs to receive an SSB message periodically.

In the embodiment of the present disclosure, based on a message structure of the SSB message, the data packet, scheduling grant information of the data packet, or configuration information of the scheduling grant information of the data packet may be reused in the PBCH. In the embodiment of the present disclosure, an SSB message having a special structure may be designed, such that the SSB message not only includes a PSS, an SSS, and the PBCH, but also includes a data packet or scheduling grant information of a data packet. All the above methods can enable the terminal device and the network device to perform data transmission immediately after cell synchronization, such that signaling overheads required for establishing an RRC connection can be reduced to the greatest extent, thereby reducing energy consumption of the terminal device and data reception delay of the terminal device. Embodiments of the above methods are described with reference to FIG. 14 to FIG. 23. Details are given as follows.

FIG. 14 is a flowchart of S900 in FIG. 13 in a case where a PBCH in the SSB message carries the data packet. When the SSB message includes a PBCH carrying the data packet, S900 includes, but not limited to, a following step S1000.

At S1000, the SSB message is sent to the terminal device, such that the terminal device acquires the data packet from the PBCH.

In the embodiment of the present disclosure, the data packet may be reused in the PBCH, i.e., the PBCH in the SSB message directly carries the data packet. After receiving the SSB message sent by the network device, the terminal device can acquire the data packet by decoding the SSB message.

FIG. 15 is a flowchart of an embodiment of S1000 in FIG. 14. The SSB message includes a PBCH, a PSS, and an SSS. At least one of the PSS or the SSS carries indication information. S1000 includes, but not limited to, a following step S1010.

At S1010, the SSB message is sent to the terminal device, such that the terminal device acquires the indication information, and acquires the data packet from the PBCH in a case where the indication information indicates that the PBCH carries the data packet.

In the embodiment of the present disclosure, indication information may further be set in the PSS or the SSS to indicate whether the PBCH carries the data packet. After receiving the SSB message sent by the network device, the terminal device acquires the indication information in the SSB message. If the indication information indicates that the PBCH carries the data packet, the terminal device acquires the data packet and broadcast information from the PBCH. If the indication information indicates that the PBCH does not carry the data packet, the terminal device acquires only the broadcast information from the PBCH.

It should be noted that the indication information may be set in the PSS only, in the SSS only, or in both the PSS and the SSS.

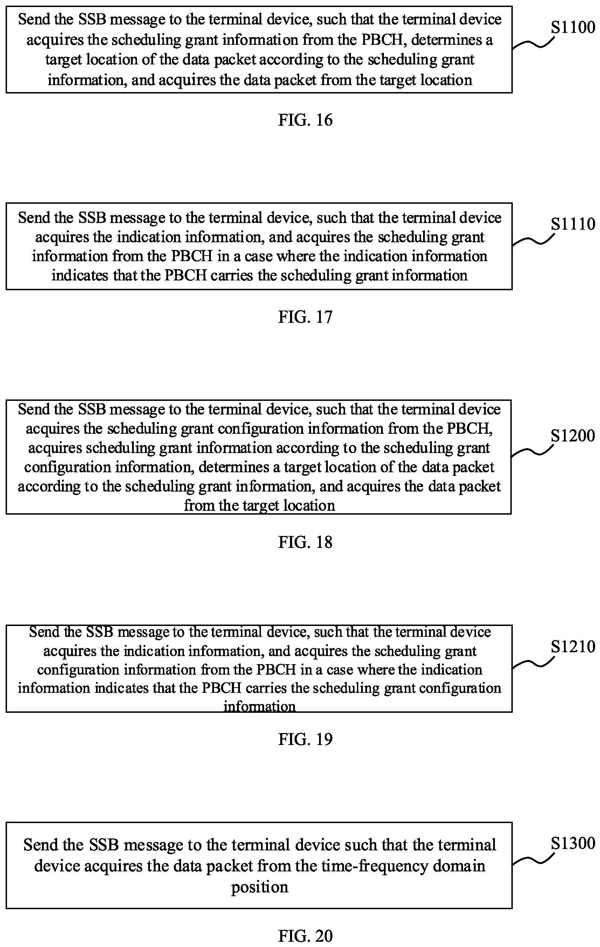

FIG. 16 is a flowchart of S900 in FIG. 13 in a case where a PBCH in the SSB message carries scheduling grant information corresponding to the data packet. When the SSB message includes a PBCH and the PBCH carries scheduling grant information corresponding to the data packet, S900 includes, but not limited to, a following step S1100.

At S1100, the SSB message is sent to the terminal device, such that the terminal device acquires the scheduling grant information from the PBCH, determines a target location of the data packet according to the scheduling grant information, and acquires the data packet from the target location.

In the embodiment of the present disclosure, the scheduling grant information corresponding to the data packet may be reused in the PBCH, i.e., the PBCH in the SSB message directly carries the scheduling grant information of the data packet. After receiving the SSB message sent by the network device, the terminal device can acquire a scheduling grant of the data packet by decoding the scheduling grant information, and then decode the data packet.

It should be noted that in the embodiment of the present disclosure, after acquiring the scheduling grant information, the terminal device obtains a target location of the data packet, and acquires the data packet from the target location. The target location of the data packet may be in or outside the SSB message.

FIG. 17 is a flowchart of an embodiment of S1100 in FIG. 16. The SSB message includes a PBCH, a PSS, and an SSS. At least one of the PSS or the SSS carries indication information. S1100 includes, but not limited to, a following step S1110.

At S1110, the SSB message is sent to the terminal device, such that the terminal device acquires the indication information, and acquires the scheduling grant information from the PBCH in a case where the indication information indicates that the PBCH carries the scheduling grant information.

In the embodiment of the present disclosure, indication information may further be set in the PSS or the SSS to indicate whether the PBCH carries scheduling grant information. After receiving the SSB message sent by the network device, the terminal device acquires the indication information in the SSB message. If the indication information indicates that the PBCH carries the scheduling grant information, the terminal device acquires the scheduling grant information and broadcast information from the PBCH. If the indication information indicates that the PBCH does not carry the scheduling grant information, the terminal device acquires only the broadcast information from the PBCH.

It should be noted that the indication information may be set in the PSS only, in the SSS only, or in both the PSS and the SSS.

FIG. 18 is a flowchart of S900 in FIG. 13 in a case where a PBCH in the SSB message carries scheduling grant configuration information. When the SSB message includes a PBCH and the PBCH carries scheduling grant configuration information, S900 includes, but not limited to, a following step S1200.

At S1200, the SSB message is sent to the terminal device, such that the terminal device acquires the scheduling grant configuration information from the PBCH, acquires scheduling grant information according to the scheduling grant configuration information, determines a target location of the data packet according to the scheduling grant information, and acquires the data packet from the target location.

In the embodiment of the present disclosure, the scheduling grant configuration information may be reused in the PBCH, i.e., the PBCH in the SSB message directly carries the scheduling grant configuration information. After receiving the SSB message sent by the network device, the terminal device can acquire the scheduling grant information by decoding the scheduling grant configuration information, and then acquire the data packet according to the scheduling grant information.

It should be noted that in the embodiment of the present disclosure, after acquiring the scheduling grant configuration information, the terminal device obtains the location of the scheduling grant information, then acquires the scheduling grant information from the location of the scheduling grant information, determines the target location of the data packet according to the scheduling grant information, and finally acquires the data packet from the target location. The location of the scheduling grant information and the target location of the data packet may be in or outside the SSB message.

FIG. 19 is a flowchart of an embodiment of S1200 in FIG. 18. The SSB message includes a PBCH, a PSS, and an SSS. At least one of the PSS or the SSS carries indication information. S1200 includes, but not limited to, a following step S1210.

At S1210, the SSB message is sent to the terminal device, such that the terminal device acquires the indication information, and acquires the scheduling grant configuration information from the PBCH in a case where the indication information indicates that the PBCH carries the scheduling grant configuration information.

In the embodiment of the present disclosure, indication information may further be set in the PSS or the SSS to indicate whether the PBCH carries scheduling grant configuration information. After receiving the SSB message sent by the network device, the terminal device acquires the indication information in the SSB message. If the indication information indicates that the PBCH carries the scheduling grant configuration information, the terminal device acquires the scheduling grant configuration information and broadcast information from the PBCH. If the indication information indicates that the PBCH does not carry the scheduling grant configuration information, the terminal device acquires only the broadcast information from the PBCH.

It should be noted that the indication information may be set in the PSS only, in the SSS only, or in both the PSS and the SSS.

FIG. 20 is a flowchart of S900 in FIG. 13 in a case where a time-frequency domain position in the SSB message includes the data packet. When a time-frequency domain position of the SSB message includes a PSS, an SSS, a PBCH, and the data packet, S900 includes, but not limited to, a following step S1300.

At S1300, the SSB message is sent to the terminal device such that the terminal device acquires the data packet from the time-frequency domain position.

In the embodiment of the present disclosure, a special SSB message may be designed, such that a time-frequency domain position of the SSB message not only includes a PSS, an SSS, and a PBCH, but also includes a data packet. In other words, the data packet is directly set in the time-frequency domain position of the SSB message. After receiving the SSB message sent by the network device, the terminal device can acquire the data packet by decoding the SSB message.

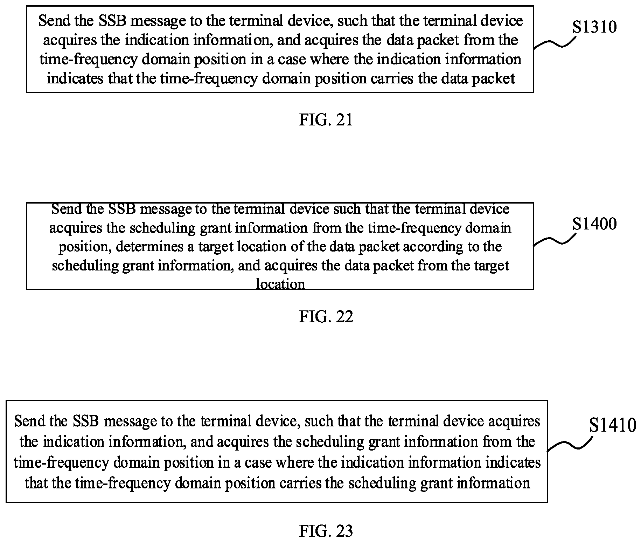

FIG. 21 is a flowchart of an embodiment of S1300 in FIG. 20. The SSB message includes a PBCH, a data packet, a PSS, and an SSS. At least one of the PSS or the SSS carries indication information. S1300 includes, but not limited to, a following step S1310.

At S1310, the SSB message is sent to the terminal device, such that the terminal device acquires the indication information, and acquires the data packet from the time-frequency domain position in a case where the indication information indicates that the time-frequency domain position carries the data packet.

In the embodiment of the present disclosure, indication information may further be set in the PSS or the SSS to indicate whether the data packet is set in the time-frequency domain position. After receiving the SSB message sent by the network device, the terminal device acquires the indication information in the SSB message. If the indication information indicates that the data packet is set in the time-frequency domain position, the terminal device acquires the data packet from the time-frequency domain position.

It should be noted that the indication information may be set in the PSS only, in the SSS only, or in both the PSS and the SSS.

FIG. 22 is a flowchart of S900 in FIG. 13 in a case where a time-frequency domain position in the SSB message includes scheduling grant information corresponding to the data packet. When a time-frequency domain position of the SSB message includes a PSS, an SSS, a PBCH, and scheduling grant information, S900 includes, but not limited to, a following step S1400.

At S1400, the SSB message is sent to the terminal device such that the terminal device acquires the scheduling grant information from the time-frequency domain position, determines a target location of the data packet according to the scheduling grant information, and acquires the data packet from the target location.

In the embodiment of the present disclosure, a special SSB message may be designed, such that a time-frequency domain position of the SSB message not only includes a PSS, an SSS, and a PBCH, but also includes scheduling grant information corresponding to a data packet. In other words, the scheduling grant information corresponding to the data packet is directly set in the time-frequency domain position of the SSB message. After receiving the SSB message sent by the network device, the terminal device can acquire the scheduling grant information corresponding to the data packet by decoding the SSB message, then acquire a scheduling grant of the data packet by decoding the scheduling grant information, and decode the data packet.

It should be noted that in the embodiment of the present disclosure, after acquiring the scheduling grant information, the terminal device obtains a target location of the data packet, and acquires the data packet from the target location. The target location of the data packet may be in or outside the SSB message.

FIG. 23 is a flowchart of an embodiment of S1400 in FIG. 22. The SSB message includes a PBCH, scheduling grant information, a PSS, and an SSS. At least one of the PSS or the SSS carries indication information. S1400 includes, but not limited to, a following step S1410.

At S1410, the SSB message is sent to the terminal device, such that the terminal device acquires the indication information, and acquires the scheduling grant information from the time-frequency domain position in a case where the indication information indicates that the time-frequency domain position carries the scheduling grant information.

In the embodiment of the present disclosure, indication information may further be set in the PSS or the SSS to indicate whether the scheduling grant information corresponding to the data packet is set in the time-frequency domain position. After receiving the SSB message sent by the network device, the terminal device acquires the indication information in the SSB message. If the indication information indicates that the scheduling grant information corresponding to the data packet is set in the time-frequency domain position, the terminal device acquires the scheduling grant information from the time-frequency domain position.

It should be noted that the indication information may be set in the PSS only, in the SSS only, or in both the PSS and the SSS.

Based on the embodiments of the data transmission method from a terminal device side in FIG. 2 to FIG. 12 and the embodiments of the data transmission method from a network device side in FIG. 13 to FIG. 23, embodiments of a data transmission method from both a terminal device side and a network device side in the present disclosure are correspondingly provided below. Details are as follows.

In a typical application of an Internet of Things (IoT) terminal, user data packets may be small and there may be a need for energy saving. When a small data packet needs to be transmitted in the network, a terminal device in an RRC_INACTIVE mode or RRC_IDLE mode needs to re-establish an RRC connection and enter an RRC_CONNECTED mode in order to implement data transmission. To avoid unnecessary signaling overheads caused by RRC connection establishment and minimize the delay of receiving data packets by the terminal device, the timing of data transmission between the network and the terminal device is advanced to after cell search, i.e., the network device can directly perform data transmission with the terminal device in the RRC_INACTIVE or RRC_IDLE mode.

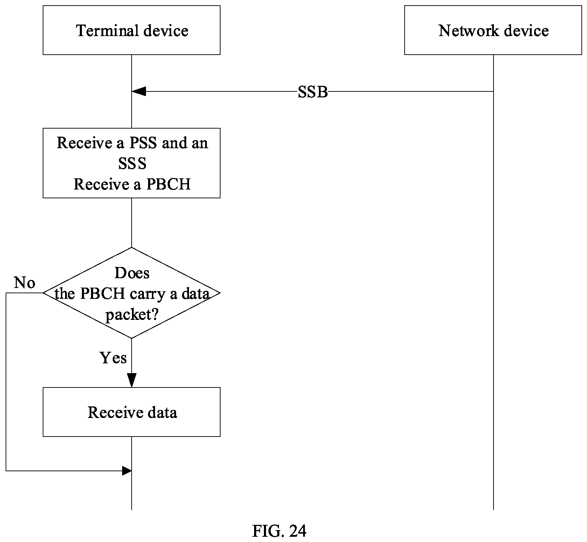

FIG. 24 is a schematic diagram of a data transmission method in a case where a PBCH in the SSB message carries the data packet according to an embodiment of the present disclosure. When the PBCH in the SSB message carries the data packet, the data transmission method includes, but not limited to, the following steps.

At step one, the terminal device receives an SSB message, performs downlink synchronization according to the PSS and the SSS, and decodes the PBCH.

At step two, the terminal device receives and acquires indication information (special-PBCH indicator) in the PSS or the SSS, where the indication information indicates to the terminal device whether the PBCH carries the data packet. If the indication information indicates that the PBCH carries the data packet, the terminal device respectively acquires broadcast information and the data packet from the PBCH. If the indication information indicates that the PBCH does not carry the data packet, the terminal device acquires the broadcast information only.

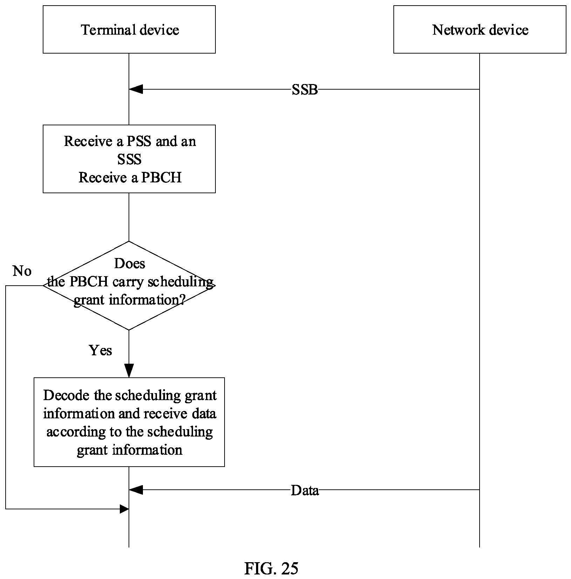

FIG. 25 is a schematic diagram of a data transmission method in a case where a PBCH in the SSB message carries scheduling grant information corresponding to the data packet according to an embodiment of the present disclosure. When the PBCH in the SSB message carries scheduling grant information (Grant) corresponding to the data packet, the data transmission method includes, but not limited to, the following steps.

At step one, the terminal device receives an SSB message, performs downlink synchronization according to the PSS and the SSS, and decodes the PBCH.

At step two, the terminal device receives and acquires indication information (special-PBCH indicator) in the PSS or the SSS, where the indication information indicates to the terminal device whether the PBCH carries the scheduling grant information (Grant) of the data packet. If the indication information indicates that the PBCH carries the scheduling grant information of the data packet, the terminal device respectively acquires broadcast information and the scheduling grant information (Grant) from the PBCH. If the indication information indicates that the PBCH does not carry the scheduling grant information (Grant) of the data packet, the terminal device acquires the broadcast information only.

At step three, after acquiring the scheduling grant information (Grant), the terminal device acquires the data packet according to an indication of the scheduling grant information (Grant).

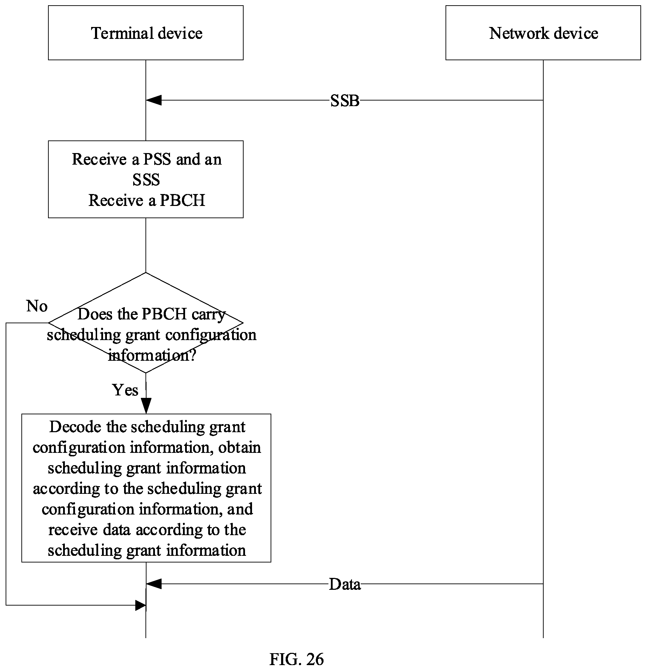

FIG. 26 is a schematic diagram of a data transmission method in a case where a PBCH in the SSB message carries scheduling grant configuration information according to an embodiment of the present disclosure. When the PBCH in the SSB message carries scheduling grant configuration information (Grant-Config) corresponding to the data packet, the data transmission method includes, but not limited to, the following steps.

At step one, the terminal device receives an SSB message, performs downlink synchronization according to the PSS and the SSS, and decodes the PBCH.

At step two, the terminal device receives and acquires indication information (special-PBCH indicator) in the PSS or the SSS, where the indication information indicates to the terminal device whether the PBCH carries the scheduling grant configuration information (Grant-Config) of the data packet. If the indication information indicates that the PBCH carries the scheduling grant configuration information (Grant-Config) of the data packet, the terminal device respectively acquires broadcast information and the scheduling grant configuration information (Grant-Config) from the PBCH. If the indication information indicates that the PBCH does not carry the scheduling grant configuration information (Grant-Config) of the data packet, the terminal device acquires the broadcast information only.

At step three, after acquiring the scheduling grant configuration information (Grant-Config), the terminal device acquires scheduling grant information (Grant) according to an indication of the scheduling grant configuration information (Grant-Config), and then acquires the data packet according to an indication of the scheduling grant information (Grant).

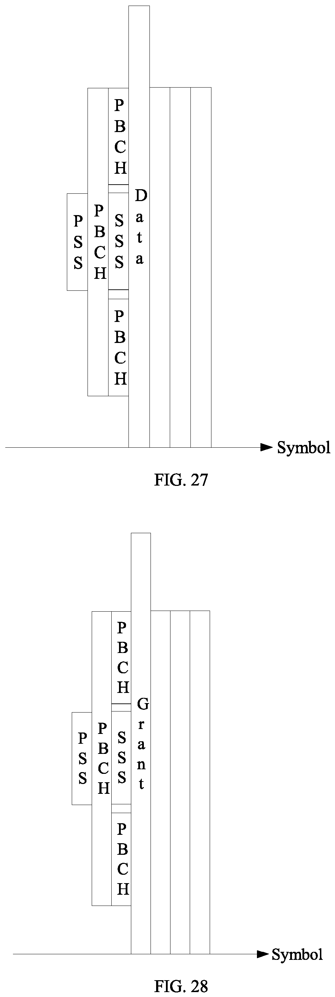

FIG. 27 is a schematic structural diagram of an SSB message in which a time-frequency domain position includes a data packet according to an embodiment of the present disclosure. A special SSB in the embodiment of the present disclosure includes a PSS, an SSS, a PBCH, and a data packet. Time-frequency domain positions of the PSS, the SSS, the PBCH, and the data packet are specified in a protocol. For example, the PSS is on the first symbol, the SSS is on the third symbol, the PBCH is on the second to fourth symbols, and the data packet is on the fifth symbol. There are 20 resource blocks (RBs). The number of RBs can be allocated, and the terminal device can acquire the data packet upon detecting the SSB.

The data transmission method includes, but not limited to, the following steps.

At step one, the terminal device receives an SSB message, performs downlink synchronization according to the PSS and the SSS, and receives the PBCH.

At step two, the terminal device acquires indication information (special-SSB indicator) in the PSS or the SSS, where the indication information indicates to the terminal device whether the SSB includes a data packet. If the indication information indicates that the SSB includes a data packet, the terminal device acquires the data packet, a modulation mode and the like of the data packet is predefined in a protocol or is configured in advance; otherwise the SSB does not include a data packet.

FIG. 28 is a schematic structural diagram of an SSB message in which a time-frequency domain position includes scheduling grant information corresponding to a data packet according to an embodiment of the present disclosure. A special SSB in the embodiment of the present disclosure includes a PSS, an SSS, a PBCH, and scheduling grant information (Grant). Time-frequency domain positions of the PSS, the SSS, the PBCH, and the scheduling grant information (Grant) are specified in a protocol. For example, the PSS is on the first symbol, the SSS is on the third symbol, the PBCH is on the second to fourth symbols, and the scheduling grant information (Grant) is on the fifth symbol. There are 20 resource blocks (RBs). The number of RBs can be allocated, and the terminal device can acquire the scheduling grant information (Grant) upon detecting the SSB.

The data transmission method includes, but not limited to, the following steps.

At step one, the terminal device receives an SSB message, performs downlink synchronization according to the PSS and the SSS, and receives the PBCH.

At step two, the terminal device acquires indication information (special-SSB indicator) in the PSS or the SSS, where the indication information indicates to the terminal device whether the SSB includes scheduling grant information (Grant). If the indication information indicates that the SSB includes the scheduling grant information (Grant), the terminal device acquires the scheduling grant information (Grant) and executes step three; otherwise the SSB does not include the scheduling grant information (Grant).

At step three, the terminal device continues to receive the scheduling grant information (Grant) in the SSB, and acquires the data packet according to an indication of the scheduling grant information (Grant).

Based on the above embodiments in FIG. 2 to FIG. 28, differences between the protocol of the present disclosure and existing protocols are set forth below.

### Acquisition of MIB and SIB1

The UE shall:
1> apply the specified BCCH configuration defined in 9.1.1.1;
1> if the UE is in RRC_IDLE or in RRC_INACTIVE; or
1> if the UE is in RRC_CONNECTED while T311 is running:
   2> acquire the MIB, which is scheduled as specified in TS 38.213 [13];
   2> if the UE is unable to acquire the MIB;
   3> perform the actions as specified in clause 5.2.2.5;
   2> else:
      3> perform the actions specified in clause 5.2.2.4.1.

### 5.2.2.4.1

### Actions upon reception of the MIB

Upon receiving the MIB the UE shall:
1> store the acquired MIB;
1> if the UE is in RRC_IDLE or in RRC_INACTIVE, or if the UE is in RRC_CONNECTED while T311 is running:
   2> if the cellBarred in the acquired MIB is set to barred:
      3> consider the cell as barred in accordance with TS 38.304 [20];
      3> perform cell re-selection to other cells on the same frequency as the barred cell as specified in TS 38.304 [20];
   2> else:
      3>apply the
      received systemFrameNumber, pdcch-ConfigSIB1, subCarrierSpacingCommon, ssb-SubcarrierOffset and dmrs-TypeA-Position.

Based on the above data transmission methods, embodiments of the terminal device, the network device, the computer-readable storage medium, and the computer program product of the present disclosure are provided below.

An embodiment of the present disclosure provides a terminal device. The terminal device includes a memory, a processor, and a computer program stored in the memory and executable by the processor, where the computer program, when executed by the processor, causes the processor to implement the data transmission method described above.

It should be noted that the terminal device in this embodiment may correspond to the terminal device in the implementation environment in the embodiment shown in FIG. 1. The two embodiments belong to the same inventive concept and therefore have the same implementation principle and technical effects, so the details will not be repeated here.

The non-transitory software program and instruction required to implement the data transmission method of the foregoing embodiments are stored in the memory which, when executed by the processor, causes the processor to implement the data transmission method of the foregoing embodiments, for example, implement the method steps in FIG. 2 to FIG. 12 described above.

It should be noted that for specific implementations and technical effects of the terminal device according to the embodiments of the present disclosure, reference may be made to the specific implementations and technical effects of the data transmission method.

In addition, an embodiment of the present disclosure provides a network device. The network device includes a memory, a processor, and a computer program stored in the memory and executable by the processor. The computer program, when executed by the processor, causes the processor to implement the data transmission method described above.

It should be noted that the network device in this embodiment may correspond to the network device in the implementation environment in the embodiment shown in FIG. 1. The two embodiments belong to the same inventive concept and therefore have the same implementation principle and technical effects, so the details will not be repeated here.

The non-transitory software program and instruction required to implement the data transmission method of the foregoing embodiments are stored in the memory which, when executed by the processor, causes the processor to implement the data transmission method of the foregoing embodiments, for example, implement the method steps in FIG. 13 to FIG. 23 described above.

It should be noted that for specific implementations and technical effects of the network device according to the embodiments of the present disclosure, reference may be made to the specific implementations and technical effects of the data transmission method.

In addition, an embodiment of the present disclosure provides a computer-readable storage medium, storing a computer-executable instruction which, when executed by a processor, causes the processor to implement the data transmission method of the foregoing embodiments, for example, implement the method steps in FIG. 2 to FIG. 23 described above.

In addition, an embodiment of the present disclosure discloses a computer program product, including a computer program or a computer instruction stored in a computer-readable storage medium which, when read from the computer-readable storage medium and executed by a processor of a computer device, causes the computer device to implement the data transmission method according to any of the above embodiments.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure have been described above, the present disclosure is not limited to the implementations described above. Those having ordinary skills in the art can make various equivalent modifications or replacements without departing from the scope of the present disclosure. Such equivalent modifications or replacements fall within the scope defined by the claims of the present disclosure.

## Claims

1. A data transmission method, applied to a terminal device, the data transmission method comprising:
acquiring a Synchronization Signal Block (SSB) message sent by a network device; and
acquiring a data packet according to the SSB message.

2. The data transmission method of claim 1, wherein the SSB message comprises a Physical Broadcast Channel (PBCH) carrying the data packet; and acquiring a data packet according to the SSB message comprises:
acquiring the data packet from the PBCH.

3. The data transmission method of claim 2, wherein the SSB message further comprises a Primary Synchronization Signal (PSS) and a Secondary Synchronization Signal (SSS), wherein at least one of the PSS or the SSS carries indication information; and acquiring the data packet from the PBCH comprises:
acquiring the indication information; and
acquiring the data packet from the PBCH in response to the indication information indicating that the PBCH carries the data packet.

4. The data transmission method of claim 1, wherein the SSB message comprises a PBCH, wherein the PBCH carries scheduling grant information corresponding to the data packet; and acquiring a data packet according to the SSB message comprises:
acquiring the scheduling grant information from the PBCH; and
determining a target location of the data packet according to the scheduling grant information, and acquiring the data packet from the target location.

5. The data transmission method of claim 4, wherein the SSB message further comprises a PSS and an SSS, wherein at least one of the PSS or the SSS carries indication information; and acquiring the scheduling grant information from the PBCH comprises:
acquiring the indication information; and
acquiring the scheduling grant information from the PBCH in response to the indication information indicating that the PBCH carries the scheduling grant information.

6. The data transmission method of claim 1, wherein the SSB message comprises a PBCH, wherein the PBCH carries scheduling grant configuration information; and acquiring a data packet according to the SSB message comprises:
acquiring the scheduling grant configuration information from the PBCH;
determining a location of scheduling grant information according to the scheduling grant configuration information, and acquiring the scheduling grant information from the location of the scheduling grant information; and
determining a target location of the data packet according to the scheduling grant information, and acquiring the data packet from the target location.

7. The data transmission method of claim 6, wherein the SSB message further comprises a PSS and an SSS, wherein at least one of the PSS or the SSS carries indication information; and acquiring the scheduling grant configuration information from the PBCH comprises:
acquiring the indication information; and
acquiring the scheduling grant configuration information from the PBCH in response to the indication information indicating that the PBCH carries the scheduling grant configuration information.

8. The data transmission method of claim 1, wherein a time-frequency domain position in the SSB message comprises the data packet; and acquiring a data packet according to the SSB message comprises:
acquiring the data packet from the time-frequency domain position.

9. The data transmission method of claim 8, wherein the SSB message further comprises a PSS and an SSS, wherein at least one of the PSS or the SSS carries indication information; and acquiring the data packet from the time-frequency domain position comprises:
acquiring the indication information; and
acquiring the data packet from the time-frequency domain position in response to the indication information indicating that the time-frequency domain position carries the data packet.

10. The data transmission method of claim 1, wherein a time-frequency domain position in the SSB message comprises scheduling grant information corresponding to the data packet; and acquiring a data packet according to the SSB message comprises:
acquiring the scheduling grant information from the time-frequency domain position; and
determining a target location of the data packet according to the scheduling grant information, and acquiring the data packet from the target location.

11. The data transmission method of claim 10,wherein the SSB message further comprises a PSS and an SSS, wherein at least one of the PSS or the SSS carries indication information; and acquiring the scheduling grant information from the time-frequency domain position comprises:
acquiring the indication information; and
acquiring the scheduling grant information from the time-frequency domain position in response to the indication information indicating that the time-frequency domain position carries the scheduling grant information.

12. A data transmission method, applied to a network device, the data transmission method comprising:
acquiring a Synchronization Signal Block (SSB) message; and
sending the SSB message to a terminal device such that the terminal device acquires a data packet according to the SSB message.

13. The data transmission method of claim 12, wherein the SSB message comprises a Physical Broadcast Channel (PBCH) carrying the data packet; and sending the SSB message to a terminal device such that the terminal device acquires a data packet according to the SSB message comprises:
sending the SSB message to the terminal device, such that the terminal device acquires the data packet from the PBCH.

14. The data transmission method of claim 13, wherein the SSB message further comprises a Primary Synchronization Signal (PSS) and a Secondary Synchronization Signal (SSS), wherein at least one of the PSS or the SSS carries indication information; and sending the SSB message to the terminal device, such that the terminal device acquires the data packet from the PBCH comprises:
sending the SSB message to the terminal device, such that the terminal device acquires the indication information, and acquires the data packet from the PBCH in response to the indication information indicating that the PBCH carries the data packet.

15. The data transmission method of claim 12, wherein the SSB message comprises a PBCH, wherein the PBCH carries scheduling grant information corresponding to the data packet; and sending the SSB message to a terminal device such that the terminal device acquires a data packet according to the SSB message comprises:
sending the SSB message to the terminal device, such that the terminal device acquires the scheduling grant information from the PBCH, determines a target location of the data packet according to the scheduling grant information, and acquires the data packet from the target location.

16. The data transmission method of claim 15, wherein the SSB message further comprises a PSS and an SSS, wherein at least one of the PSS or the SSS carries indication information; and sending the SSB message to the terminal device, such that the terminal device acquires the scheduling grant information from the PBCH comprises:
sending the SSB message to the terminal device, such that the terminal device acquires the indication information, and acquires the scheduling grant information from the PBCH in response to the indication information indicating that the PBCH carries the scheduling grant information.

17. The data transmission method of claim 12, wherein the SSB message comprises a PBCH, wherein the PBCH carries scheduling grant configuration information; and sending the SSB message to a terminal device such that the terminal device acquires a data packet according to the SSB message comprises:
sending the SSB message to the terminal device, such that the terminal device acquires the scheduling grant configuration information from the PBCH, acquires scheduling grant information according to the scheduling grant configuration information, determines a target location of the data packet according to the scheduling grant information, and acquires the data packet from the target location.

18. The data transmission method of claim 17, wherein the SSB message further comprises a PSS and an SSS, wherein at least one of the PSS or the SSS carries indication information; and sending the SSB message to the terminal device, such that the terminal device acquires the scheduling grant configuration information from the PBCH comprises:
sending the SSB message to the terminal device, such that the terminal device acquires the indication information, and acquires the scheduling grant configuration information from the PBCH in response to the indication information indicating that the PBCH carries the scheduling grant configuration information.

19. The data transmission method of claim 12, wherein a time-frequency domain position in the SSB message comprises the data packet; and sending the SSB message to a terminal device such that the terminal device acquires a data packet according to the SSB message comprises:
sending the SSB message to the terminal device such that the terminal device acquires the data packet from the time-frequency domain position.

20. The data transmission method of claim 19, wherein the SSB message further comprises a PSS and an SSS, wherein at least one of the PSS or the SSS carries indication information; and sending the SSB message to the terminal device such that the terminal device acquires the data packet from the time-frequency domain position comprises:
sending the SSB message to the terminal device, such that the terminal device acquires the indication information, and acquires the data packet from the time-frequency domain position in response to the indication information indicating that the time-frequency domain position carries the data packet.

21. The data transmission method of claim 12, wherein a time-frequency domain position in the SSB message comprises scheduling grant information corresponding to the data packet; and sending the SSB message to a terminal device such that the terminal device acquires a data packet according to the SSB message comprises:
sending the SSB message to the terminal device such that the terminal device acquires the scheduling grant information from the time-frequency domain position, determines a target location of the data packet according to the scheduling grant information, and acquires the data packet from the target location.

22. The data transmission method of claim 21, wherein the SSB message further comprises a PSS and an SSS, wherein at least one of the PSS or the SSS carries indication information; and sending the SSB message to the terminal device such that the terminal device acquires the scheduling grant information from the time-frequency domain position comprises:
sending the SSB message to the terminal device, such that the terminal device acquires the indication information, and acquires the scheduling grant information from the time-frequency domain position in response to the indication information indicating that the time-frequency domain position carries the scheduling grant information.

23. A terminal device, comprising: a memory, a processor, and a computer program stored in the memory and executable by the processor, wherein the computer program, when executed by the processor, causes the processor to carry out the data transmission method of any of claims 1 to 11.

24. A network device, comprising: a memory, a processor, and a computer program stored in the memory and executable by the processor, wherein the computer program, when executed by the processor, causes the processor to carry out the data transmission method of any of claims 12 to 22.

25. A computer-readable storage medium, storing a computer-executable instruction which, when executed by a computer, causes the computer to carry out the data transmission method of any of claims 1 to 22.

26. A computer program product, comprising a computer program or a computer instruction stored in a computer-readable storage medium which, when read from the computer-readable storage medium and executed by a processor of a computer device, causes the computer device to carry out the data transmission method of any of claims 1 to 22.
